## Europäisches Patentamt

## European Patent Office

## Office européen des brevets

(19)

(11) Veröffentlichungsnummer: **0 229 743**
B1

(12)

# EUROPÄISCHE PATENTSCHRIFT

(45) Veröffentlichungstag der Patentschrift:
04.10.89

(21) Anmeldenummer: 87810010.6

(22) Anmeldetag: 08.01.87

(51) Int. Cl.⁴: **B29C 65/34**, G05D 23/27,
F16L 47/02
// B29L23:22

(54) Einrichtng mit einer Kunststoff-Schweissmuffe und einem Anschlusskopf.

(30) Priorität: 08.01.86 CH 42/86

(43) Veröffentlichungstag der Anmeldung:
22.07.87 Patentblatt 87/30

(45) Bekanntmachung des Hinweises auf die Patenterteilung:
04.10.89 Patentblatt 89/40

(84) Benannte Vertragsstaaten:
AT BE DE FR IT NL SE

(56) Entgegenhaltungen:
EP-A- 0 129 505
EP-A- 0 149 410
CH-A- 612 489
DE-A- 1 206 572
FR-A- 2 335 325
FR-A- 2 338 203
US-A- 1 774 433
US-A- 2 666 583
US-A- 4 180 722

(73) Patentinhaber: Geberit AG, Schachenstrasse 77,
CH-8645 Jona(CH)

(72) Erfinder: Etter, Bruno, Pestalozzistrasse 20,
CH-8865 Bilten(CH)

(74) Vertreter: White, William et al, Isler AG
Patentanwalts-Bureau Walchestrasse 23,
CH-8006 Zürich(CH)

## Beschreibung

Die Erfindung bezieht sich auf eine Einrichtung mit einer durch einen Heizstrom erwärmbaren Kunststoff-Schweissmuffe und einem auf diese aufsteckbaren Anschlusskopf gemäss dem Oberbegriff des Patentanspruchs 1.

Eine seit längerer Zeit handelsübliche Einrichtung dieser Art ist aus der CH-A 612 489 bekannt. Zur Steuerung des Heizstromes der Kunststoff-Schweissmuffe ist das äussere, über das Anschlusskabel mit dem Anschlusskopf verbundene Steuergerät beispielsweise mit einem Zeitschalter versehen. Eine solche Steuerung hat jedoch die Nachteile, dass der Zeitschalter zur Berücksichtigung unterschiedlicher Schweissmuffengrössen bzw. unterschiedlichen Heizenergiebedarfs einstellbar sein muss, wodurch Fehler in der Zeitvorgabe auftreten können, und dass versehentlich ein weiterer Heizvorgang an derselben Schweissmuffe vorgenommen werden kann, auch wenn der Farbumschlag an deren Temperaturindikator anzeigt, dass die Verschweissung bereits ordnungsgemäss erfolgt ist. Durch die US-A 2 666 583 ist ein Regelvorrichtung bekannt, mit der eine vorgegebene Temperatur fortlaufend durch Eingriffe aufgrund von Messungen der Temperatur anhand eines reversiblen Farbumschlages eines Lichtfilters in einem Richtrohr aufrecht erhalten wird. Eine solche Regelvorrichtung an einer Schweissmuffe könnte nicht verhindern, dass versehentlich ein weiterer Heizvorgang an derselben Schweissmuffe vorgenommen werden kann.

Um Bedienungsfehler durch einstellbare Zeitschalter zu vermeiden, ist es aus der Europäischen Patentanmeldung 84 810 208.3 (Veröffentlichung Nr. 0 129 505) bekannt, in dem als Zwischenstecker ausgebildeten Anschlusskopf einen thermischen Ausschalter anzuordnen, der bei Erreichen einer bestimmten Temperatur der Schweissmuffe die Stromzufuhr zur Heizwicklung der Schweissmuffe unterbricht. Nachteilig bei dieser bekannten Steuervorrichtung ist jedoch, dass besondere Vorkehrungen getroffen werden müssen, damit die Fühlerfläche des thermischen Ausschalters immer in innigem thermischem Kontakt mit der Schweissmuffe steht, da ein behinderter Wärmeübergang den Ausschaltzeitpunkt verfälschen würde. Nachteilig ist ebenfalls die einem thermischen Ausschalter eigene thermische Trägheit, insbesondere in Verbindung mit dem den Ausschalter aufnehmenden Anschlusskopf. Werden mehrere Schweissmuffen kurz nacheinander erwärmt, so tritt wegen dieser Trägheit ebenfalls eine Verfälschung des Ausschaltpunkts auf, und zwar im Sinne einer zu kurzen Schweisszeit. Schliesslich ist nachteilig, dass bei zeitweiligem Verbleiben des Anschlusskopfs auf der Schweissmuffe ein unerwünschtes Wiedereinschalten des Heizstroms auch dann auftreten kann, wenn der thermische Ausschalter eine verzögerte Wiedereinschaltcharakteristik hat.

Aus der Europäischen Patentanmeldung Nr. 82 810 308.5 (Publikation Nr. 0 093 821) ist ferner eine Schweissmuffe bekannt, bei welcher der Stromleiter in der Schweissmuffe mit einem Unterbrecher, z.B. einer Thermosicherung, versehen ist, der so dimensioniert ist, dass er die Stromleitung irreversibel unterbricht, wenn im Heizleiter die zum Verschweissen der Muffe nötige Energie umgesetzt ist. Mit einer solchen in die Schweissmuffe eingebauten Thermosicherung wird zwar eine irreversible Abtrennung der Heizwicklung der Schweissmuffe von der speisenden Stromleitung ohne Verfälschung durch Wärmeübergänge erzielt. Jedoch bestehen insbesondere bei Schweissmuffen kleinerer Dimensionen (Nenngrössen) die Nachteile mangelnden Raumes zum Unterbringen des Unterbrechers in der Schweissmuffe und einer ins Gewicht fallenden Erhöhung der Herstellungskosten der einzelnen Schweissmuffe. Dies ist besonders dann der Fall, wenn zur Gewährleistung einer sicheren Abschaltung zwei derartige Unterbrecher in der Schweissmuffe in Reihe geschaltet angeordnet werden.

Es ist Aufgabe der vorliegenden Erfindung, eine Einrichtung mit einer durch einen Heizstrom erwärmbaren Kunststoff-Schweissmuffe der eingangs genannten Art zu schaffen, mit welcher ein sicheres Unterbrechen des Heizstromes bei genauem Erreichen der erforderlichen Schweissmuffentemperatur ohne bauliche Aenderung der Schweissmuffe ermöglicht wird.

Zur Lösung dieser Aufgabe weist die erfindungsgemässe Einrichtung die im kennzeichnenden Teil des Patentanspruchs 1 angeführten Merkmale auf.

Da der Temperaturindikator als Klebeplättchen oder -folie in an sich bekannter Weise direkt auf der Oberfläche der Schweissmuffe angebracht werden kann, zeigt sein Farbumschlag die gewünschte Oberflächentemperatur am Ende des Schweissvorgangs mit grosser Genauigkeit an. Die erfindungsgemässe optische Erfassung des Farbumschlags ermöglicht deshalb eine sichere und temperaturgenaue Steuerung, d.h. Abschaltung, der Stromzufuhr zur Heizwicklung der Schweissmuffe. Da der Farbumschlag des Temperaturindikators irreversibel ist, kann die gleiche Schweissmuffe versehentlich nicht ein zweites Mal mit Heizstrom gespeist werden, da der Opto-Fühler dem Steuergerät ja eine bereits verschweisste Muffe anzeigt und dieses sperrt.

Ein Ausführungsbeispiel der erfindungsgemässen Einrichtung wird nachstehend anhand der Zeichnung erläutert. Es zeigen:

Fig. 1 einen Schnitt durch den Anschlusteil einer Schweissmuffe mit aufgesetztem Anschlusskopf, und

Fig. 2 eine Draufsicht auf den Anschlusteil der Schweissmuffe bei abgenommenem Anschlusskopf.

Eine zylindrische Kunststoff-Schweissmuffe 1 ist in bekannter Weise mit einer Widerstandsdrahtwicklung 2 versehen, welche in die Innenfläche 3 der Schweissmuffe eingelegt ist. Die beiden Enden der Wicklung 2 sind mit je einem Steckerstift 4 bzw. 5 verbunden. Jeder Steckerstift 4, 5 ist von einer Kunststoff-Schutzhülse 6 bzw. 7 umgeben, die einen Berührungs- und Verschmutzungsschutz bildet.

Ein Anschlusskopf 8 ist mit zwei Steckerbuchsen 9 und 10 für die Steckerstifte 4 bzw. 5 der Schweissmuffe 1 versehen. Jede Steckerbuchse 9, 10 ist von einer abdeckenden und isolierenden Kunststoffhülse 11 bzw. 12 umgeben, welche auch die Stirnseite der betreffenden Steckerbuchse 9, 10 bis auf ein Loch zum Hindurchführen des Steckerstifts 4 bzw. 5 abdeckt, wenn der Anschlusskopf 8 auf die Schweissmuffe 1 aufgesteckt wird. Die Stirnseiten der Kunststoffhülsen 11, 12 dienen gleichzeitig als Endanschlagflächen beim Aufstecken des Anschlusskopfs 8 auf die Schweissmuffe 1. Mit dem Anschlusskopf 8 ist ein mehradriges Muffenkabel 13 zugfest und abgedichtet verbunden; wobei zwei Adern 14 und 15 des Muffenkabels 13 mit je einer der Steckerbuchsen 9, 10 in elektrischer Verbindung stehen. Ein nicht dargestelltes Steuergerät führt der Wicklung 2 über die Adern 14, 15 einen Heizstrom zur Erwärmung der Schweissmuffe 1 zu.

Benachbart zu jeder Schutzhülse 6, 7 ist eine weitere, niedrigere Kunststoff-Hülse 16 bzw. 17 angeformt. In den Boden jedes dieser napfartigen Teile, d.h. auf die Aussenoberfläche der Schweissmuffe 1, ist ein Temperaturindikator 18 bzw. 19 eingelegt, der die Form einer dünnen, kreisförmigen Scheibe hat und an seiner nach aussen gerichteten Seite einen Farbbelag aufweist, welcher bei einer bestimmten Temperatur einen irreversiblen Farbumschlag, vorzugsweise von weiss zu schwarz, erfährt. Solche Temperaturindikatoren sind bekannt.

Der Anschlusskopf 8 ist mit einem den Temperaturindikatoren 18, 19 zugeordneten Opto-Fühler 20 versehen, der ein zylindrisches Gehäuse 21 hat, dessen Längsachse parallel zur Längsachse der benachbarten Steckerbuchse 9 verläuft. Der Opto-Fühler 20 ist so angeordnet, dass sein Gehäuse 21 beim Aufstecken des Anschlusskopfs 8 auf die Schweissmuffe 1 während des letzten, relativ kurzen Abschnitts der Aufsteckstrecke in das Innere der einen Temperaturindikator-Hülse 16 oder 17 eintaucht, und dass seine Stirnseite 22 nach vollständigem Aufstecken des Anschlusskopfs 8 einen bestimmten Abstand vom betreffenden Temperaturindikator 18 bzw. 19 hat. Da bei jedem Steckerstift 4, 5 bzw. dessen Schutzhülse 6, 7 ein Temperaturindikator 18, 19 angeordnet ist, spielt es keine Rolle, in welcher Richtung der Anschlusskopf 8 auf die Schweissmuffe 1 gesteckt wird.

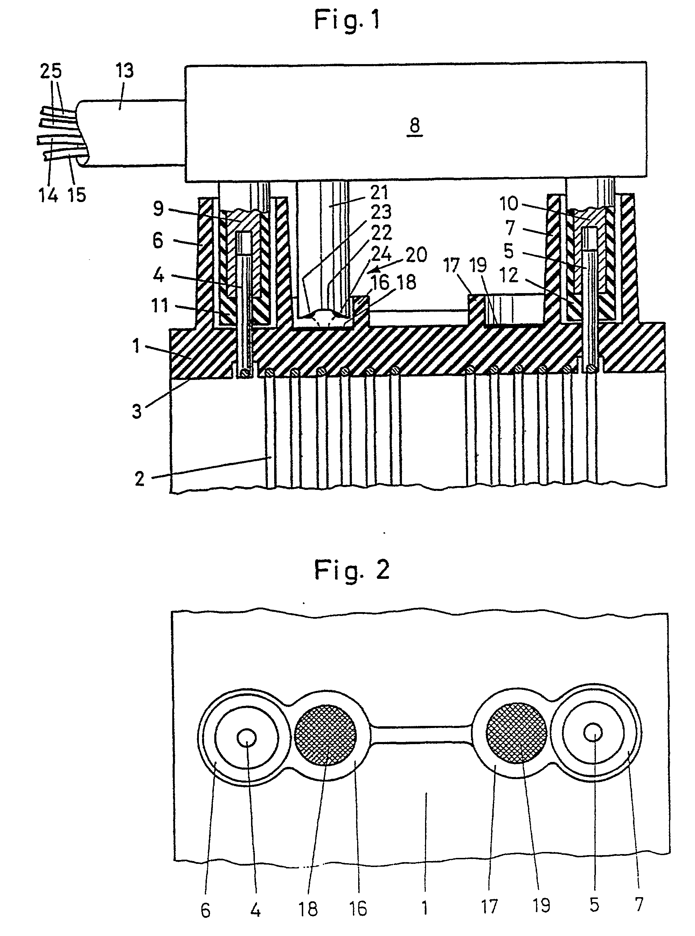

An der Stirnseite 22 des Opto-Fühlers 20 sind schräg zur Längsachse des Gehäuses 21 eine Infrarot-Lichtquelle 23, beispielsweise eine lichtemittierende Diode, und ein Infraro-Lichtempfänger 24, beispielsweise ein Phototransistor, angeordnet, derart, dass sich die in Fig. 1 angedeuteten optischen Achsen der Lichtquelle 23 und des Lichtempfängers ungefähr auf der Oberfläche des Temperaturindikators 18 schneiden. Nicht dargestellte elektrische Anschlüsse der Lichtquelle 23 und des Lichtempfängers 24 sind an weitere Adern 25 des Muffenkabels 13 angeschlossen und über diese mit einer im nicht dargestellten Steuergerät enthaltenen Speise- und Auswerteschaltung verbunden, die nachstehend noch erläutert wird.

Bei aufgesetztem Anschlusskopf 8 (Fig. 1) und im Neuzustand des Temperaturindikators 18, d.h. wenn dieser vor Beginn des Schweissvorgangs eine helle, beispielsweise weisse Oberfläche hat, wird ein Teil des Infrarotlichtes der Lichtquelle 23 von der Oberfläche des Temperaturindikators 18 zum Lichtempfänger 24 reflektiert. Wenn beim nachfolgenden Schweissvorgang durch Stromzufuhr zur Wicklung 2 die Schweissmuffe 2 eine bestimmte Oberflächentemperatur erreicht hat, tritt an der Oberfläche des Temperaturindikators 18 ein Farbumschlag auf eine dunklere, z.B. schwarze Farbe auf, so dass nun wesentlich weniger oder praktisch kein Infrarotlicht zum Lichtempfänger 24 reflektiert wird. Diesen beiden Zuständen des Lichteinfalls auf den Lichtempfänger 24 entsprechen zwei verschiedene elektrische Zustände oder Signalzustände des Lichtempfängers 24, so dass die genannte Aenderung des Lichteinfalls bei Erreichen der gewünschten Muffentemperatur eine entsprechende elektrische Signaländerung hervorruft, die über das Muffenkabel 13 an die Auswerteschaltung des Steuergeräts gelangt und dann ein Abschalten des der Wicklung 2 der Schweissmuffe zugeführten Heizstroms bewirkt.

Das Steuergerät bzw. dessen Auswerteschaltung für das vom Opto-Fühler 20 gelieferte Signal können, wie ohne weiteres einzusehen ist, sehr einfach ausgebildet sein, so dass eine ins Einzelne gehende Erläuterung nicht erforderlich ist. Das Steuergerät kann beispielsweise einen durch eine Start-Taste elektromagnetisch betätigbaren Leistungsschalter enthalten, dessen Steuereingang zudem mit einem Ausgangssignal der genannten Auswerteschaltung verkettet ist. Die Auswerteschaltung kann in einfacher Form eine bistabile, elektronische Schaltung sein, welche über entsprechende Adern 25 des Muffenkabels 13 derart gesteuert ist, dass sie in ihrem einen Zustand ein den Leistungsschalter freigebendes Ausgangssignal dann abgibt, wenn der Opto-Fühler 20 den Neu-Zustand (z.B. weissen Zustand) eines der Temperaturindikatoren 18, 19 feststellt, und ein den Leistungsschalter sperrendes Ausgangssignal dann abgibt, wenn der Opto-Fühler den genannten Neu-Zustand des Temperaturindikators nicht feststellt, sei es, dass dessen Farbe umgeschlagen hat oder dass der Anschlusskopf 8 nicht auf eine Schweissmuffe 1 aufgesetzt ist. Somit ist die vorliegende Einrichtung bei geringem, sich nur einmalig auf den Anschlusskopf und auf das Steuergerät erstreckenden Schaltungsaufwand absolut betriebssicher.

Zur Verschweissung einer erfindungsgemäss ausgebildeten Kunststoff-Schweissmuffe mit einem Kunststoff-Rohrstück ist deshalb in einfacher Weise wie folgt vorzugehen:

1) Das Netzkabel des Steuergeräts wird an einer Netzsteckdose angeschlossen.

2) Der Anschlusskopf 8 wird auf die Schweissmuffe 1 aufgesteckt, deren Temperaturindikator 18 oder 19 sich noch im Neu-Zustand, vorzugsweise mit weissem Farbton, befindet.

3) Die Start-Taste des Steuergeräts wird betätigt, so dass das Steuergerät einen Heizstrom an die Wicklung 2 der Schweissmuffe 1 abgibt und diese sich erwärmt.

4) Der Anschlusskopf 8 wird von der Schweissmuffe 1 entfernt, sobald die bestimmte Oberflächentemperatur der Schweissmuffe 1 erreicht ist, bei den Temperaturindikatoren 18 und 19 der Schweissmuffe 1 ein Farbumschlag, beispielsweise von weiss auf schwarz, eingetreten ist, und der Opto-Fühler 20 diesen Farbumschlag feststellt und in Form eines durch seine Zustandsänderung erzeugen elektrischen Signals an das Steuergerät übermittelt, welches dann die Stromzufuhr zur Schweissmuffe 1 unterbricht. Eine Wiedereinschaltung des Steuergeräts ist hiernach erst möglich, wenn der Opto-Fühler 20 einen Temperaturindikator im Neuzustand feststellt, oder mit anderen Worten der Anschlusskopf 8 auf eine noch nicht verschweisste Schweissmuffe 1 aufgesetzt worden ist.

## Patentansprüche

1. Einrichtung mit einer durch einen Heizstrom erwärmbaren Kunststoff-Schweissmuffe (1) und einem auf diese aufsteckbaren Anschlusskopf (8), wobei die Schweissmuffe (1) mit Steckerstiften (4, 5) welche mit einer Heeizwicklung (2) verbunden sind, und mit einem Temperaturindikator (18, 19) versehen ist, der bei Erreichen eineer bestimmten Temperatur der Schweissmuffe (1) einem irreversibleen Farbumschlag unterworfen ist, und wobei der Anschlusskopf (8) mit den Steckerstiften (4, 5) der Schweissmuffe (1) entsprechenden Kontaktbuchsen (9, 10) versehen und zur Verbindung mit einem Anschlusskabel (13) für äusseres Steuergerät ausgebildet ist, wobei der Temperaturindikator (18, 19) auf der Schweissmuffe im Bereich des Anschlusskopfs angeordnet ist, dadurcch gekennzeichnet, dass dem Temperaturindikator (18, 19) ein im Anschlusskopf (8) angeordneter Opto-Fühler (20) zugeordnet ist, welcher auf den Farbumschlag des Temperaturindikators (18, 19) anspricht, derart, dass der elektrische Zustand des Opto-Fühlers (20) über zugeordnete Leitungen (25) des Anschlusskabels (13) an das äussere Steuergerät für den Heizstrom übertragbar ist.

2. Einrichtung nach Anspruch 1, dadurch gekennzeichnet, dass der im Anschlusskopf (8) angeordnete Opto-Fühler (20) eine Stirnfläche (22) aufweist, welche bei auf der Schweissmuffe (1) aufgesetztem Anschlusskopf (8) dem Temperaturindikator (18,19) mit Abstand unmittelbar gegenüberliegt, und dass in der Stirnfläche des Opto-Fühlers ein Infrarotlichtsender (23) und ein Infrarotlichtempfänger (24) angeordnet sind.

3. Einrichtung nach Anspruch 2, dadurch gekennzeichnet, dass der Opto-Fühler (20) ein zylindrisches Gehäuse (21) aufweist, und dass die Schweissmuffe (1) mit einer angeformten Hülse (16,17) versehen ist, auf deren durch eine Aussenoberfläche der Schweissmuffe (1) gebildetem Boden der Temperaturindikator (18,19) angebracht ist und welche das Gehäuse (21) des Opto-Fühlers (20) aufnimmt, wenn der Anschlusskopf (8) auf die Schweissmuffe (1) aufgesetzt wird.

4. Einrichtung nach einem der Ansprüche 1 bis 3, dadurch gekennzeichnet, dass zwischen den Steckerstiften (4,5) der Schweissmuffe (1) zwei Temperaturindikatoren (18,19) symmetrisch angebracht sind, um ein richtungsunabhängiges Aufsetzen des Anschlusskopfs (8) auf die Schweissmuffe (1) zu ermöglichen.

## Revendications

1. Dispositif comportant un manchon à souder (1) en matière plastique pouvant être chauffé par un courant de chauffage et une tête de raccordement (8) pouvant être placée sur le manchon, celui-ci (1) comportant des broches mâles (4, 5) qui sont reliées à un enroulement de chauffage (2), et un indicateur de température (18, 19) qui, lorsqu'une température déterminée du manchon à souder (1) est atteinte, subit un changement de couleur irréversible, et la tête de raccordement (8) comportant des contacts femelles (9, 10) correspondant aux broches mâles (4, 5) du manchon à souder (1) et étant conformée pour la liaison avec un câble de raccordement (13) à un appareil de commande extérieur, l'indicateur de température (18, 19) étant placé sur le manchon à souder au voisinage de la tête de raccordement, caractérisé en ce qu'à l'indicateur de température (18, 19) correspond un capteur optique (20) placé dans la tête de raccordement (8), qui réagit au changement de couleur de l'indicateur de température (18, 19) de telle sorte que l'état électrique du capteur optique (20) peut être transmis, par des conducteurs correspondants (25) du câble de raccordement (13), à l'appareil de commande extérieur pour le courant de chauffage.

2. Dispositif selon la revendication 1, caractérisé en ce que le capteur optique (20) placé dans la tête de raccordement (8) comporte une surface frontale (22) qui, lorsque la tête de raccordement (8) est placée sur le manchon à souder (1), est placée à distance juste en face de l'indicateur de température (18, 19), eet en ce qu'un émetteur d'infrarouge (23) et un récepteur d'infrarouge (24) sont placés dans la surface frontale du capteur optique.

3. Dispositif selon la revendication 2, caractérisé en ce que le capteur optique (20) comporte un boîtier cylindrique (21), et en ce que le manchon à souder (1) comporte une douille (16, 17) dont le fond est formé par une surface extérieure du manchon à souder (1) et reçoit l'indicateur de température (18, 19), la douille logeant le boîtier (21) du capteur optique (20) lorsque la tête de raccordement (8) est posée sur le manchon à souder (1).

4. Dispositif selon l'une des revendications 1 à 3, caractérisé en ce que deux indicateurs de température (18, 19) sont placés symétriquement entre les broches mâles (4, 5) du manchon à souder (1), pour permettre le placement de la tête de raccordement (8) sur le manchon à souder (1), indépendamment de l'orientation de la tête de raccordement.

## Claims

1. Apparatus with a plastics welded sleeve (1), which can be heated by a heating current, and a connection head (8), which can be plugged onto the said sleeve, the welded sleeve (1) being provided with plug pins (4, 5), which are connected to a heating winding (2), and with a temperature indicator (18, 19), which on reaching a certain temperature of the welded sleeve (1) is subjected to an irreversible colour change, and the cconnection head (8) being provided with contact sockets (9, 10) corresponding to the plug pins (4, 5) of the welded sleeve (1) and designed for connection to a connection cable (13) for an external control device, the temperature indicator (18, 19) being arranged on the welded sleeve in the region of the connection head, characterized in that the temperature indicator (18, 19) is assigned an opto-sensor (20), which is arranged in the connection head (8) and responds to the colour change of the temperature indicator (18, 19) in such a way that the electrical state of the opto-sensor (20) can be transmitted over assigned lines (25) of the connection cable (13) to the external control device for the heating current.

2. Apparatus according to claim 1, characterized in that the opto-sensor (20) arranged in the connection head (8) has an end face (22) which lies directly opposite the temperature indicator (18, 19) at a distance when the connection head (8) is fitted on the welded sleeve (1), and in that an infrared light transmitter (23) and an infrared light receiver (24) are arranged in the end face of the opto-sensor.

3. Apparatus according to Claim 2, characterized in that the opto-sensor (20) has a cylindrical housing (21), and in that the welded sleeve (1) is provided with a moulded-on sheath (16, 17), on the base of which, formed by an outside surface of the welded sleeve (1), the temperature indicator (18, 19) is attached and which receives the housing (21) of the opto-sensor (20) when the connection head (8) is fitted onto the welded sleeve (1).

4. Apparatus to one of the Claims 1–3, characterised in that two temperature indicators (18, 19) are symmetrically attached between the plug pins (4, 5) of the welded sleeve (1) in order to make possible a directionally independent fitting of the connection head (8) onto the welded sleeve (1).

# Fig. 1

# Fig. 2